# EUROPEAN PATENT APPLICATION

(11) **EP 1 950 972 A1**
(43) Date of publication of application: **30.07.2008**
(21) Application number: 06711813.3
(22) Date of filing: 17.01.2006
(51) Int. Cl.: H04N 7/32

(54) **MOTION VECTOR CALCULATION DEVICE AND MOTION VECTOR CALCULATION METHOD**

(30) Priority: 15.11.2005 JP 2005329770
(71) Applicant: Sharp Kabushiki Kaisha, Osaka-shi, Osaka 545-8522 (JP)
(72) Inventor: NISHIDA, Kazuhito, Tochigi 329-2756 (JP)
(74) Representative: Müller - Hoffmann & Partner
(86) International application number: PCT/JP2006/300533
(87) International publication number: WO 2007/057986

(57) **Abstract**

The conventional technique has a problem that when a calculated global motion vector is incorrect, a search range is difference from the original one and the possibility of incorrect calculation of the motion vector becomes high and problem that the incorrect calculation of the motion vector may cause lowering of efficiency of the dynamic image encoding. A motion vector calculation device divides a global macro block into middle blocks and detects middle motion vectors for calculation of a global motion vector. Middle motion vectors considered to have abnormal values are excluded from the detected middle motion vectors. According to the remaining middle motion vectors, an accurate global motion vector is calculated.

## Description

### BACKGROUND OF THE INVENTION

### Field of the Invention

The present invention relates to a calculation technology for global motion vector in order to calculate motion vector utilized for inter-frame prediction upon coding of inputted image.

### Description of the Related Art

Conventionally, in high-efficiency coding of image, the following three image transformations are mainly used for compressing amounts of moving image information, thereby carrying out coding. Therefore, the three image transformations are the first image transformation by means of correlation of image (spatial correlation), the second image transformation by means of correlation between times (time correlation), and the third image transformation by means of variable length coding. Specifically, in the second coding by means of time correlation, moving direction and moving distance of image between temporally-different frames (inputted images) are detected as 'motion vector' on a macro block basis, and a frame is expressed based on pixel information of the macro block and the motion vector information, thereby reducing the amount of image information.

However, in the detection process of the 'motion vector', when detecting a block in another frame, a destination (or a source) of the macro block, for example, in the case of video including dynamic scenes such as a sports video, it is required to set a wide search range, thereby greatly increasing amounts of the calculation. Therefore, in WO00/05899, it is disclosed that the global motion vector of the entire image is detected by means of the reduced image of the current frame, and the search range of destination of the macro block is narrowed by means of the global motion vector, thereby detecting the motion vector.

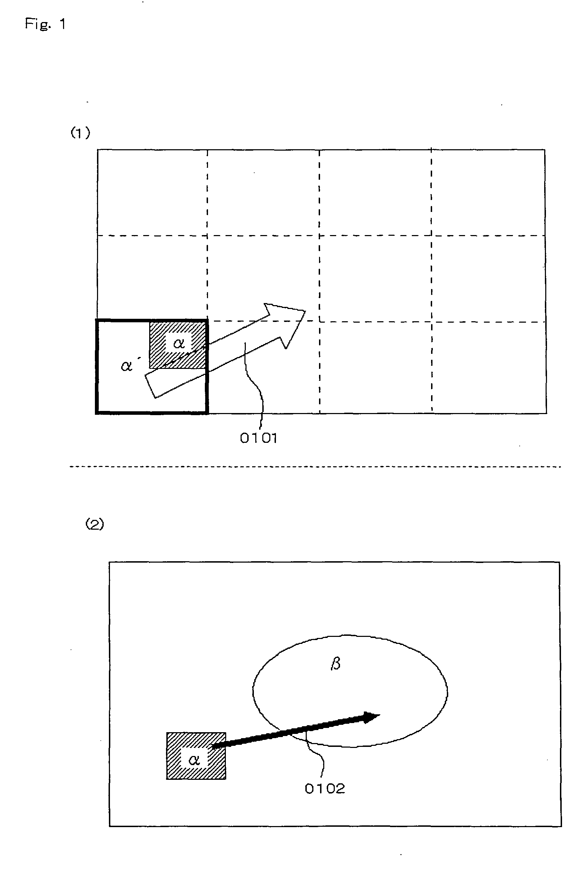

Fig. 1 is a diagram exemplifying another detection of motion vector of the macro block by means of the above global motion vector. As shown in Fig. 1 (1), at the outset, the global motion vector (0101) of the global macro block α' including the macro block α, of which motion vector is to be detected, is detected. Therefore, it is probable that the macro block α moves within a predetermined range including the destination of the global macro block α' indicated by this global motion vector. Therefore, calculation of the range β of Fig. 1 (2) as the search range of the motion vector of the macro block α is carried out, so that it becomes possible to detect the motion vector (0102) of the macro block α without unnecessarily widening search range.

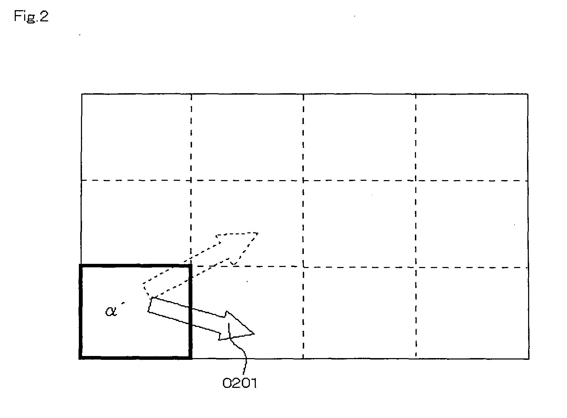

However, the conventional calculation has the following deficiencies. As shown by solid lines in Fig. 2, in cases where the calculated global motion vector is incorrect (correct global motion vector is indicated by a perforated arrow), the search range determined based on the incorrect global motion vector is different from search range to be determined. Consequently, it is highly possible that the motion vector of macro block calculated based on the incorrect search range is incorrectly calculated. Further, it is possible that the efficiency of the coding of moving image is low due to the error in the calculation of the motion vector. The reason for this is that the motion vector incorrectly calculated has an extreme value in many cases. Therefore, the motion vector is calculated by referring an absolutely different block from a block to be referred. Accordingly, in cases where the absolute value of the vector is a large extreme value, the efficiency of the coding is down in Golomb coding etc., in which as the absolute value of vector becomes close to 0, high-efficient coding becomes possible.

### SUMMARY OF THE INVENTION

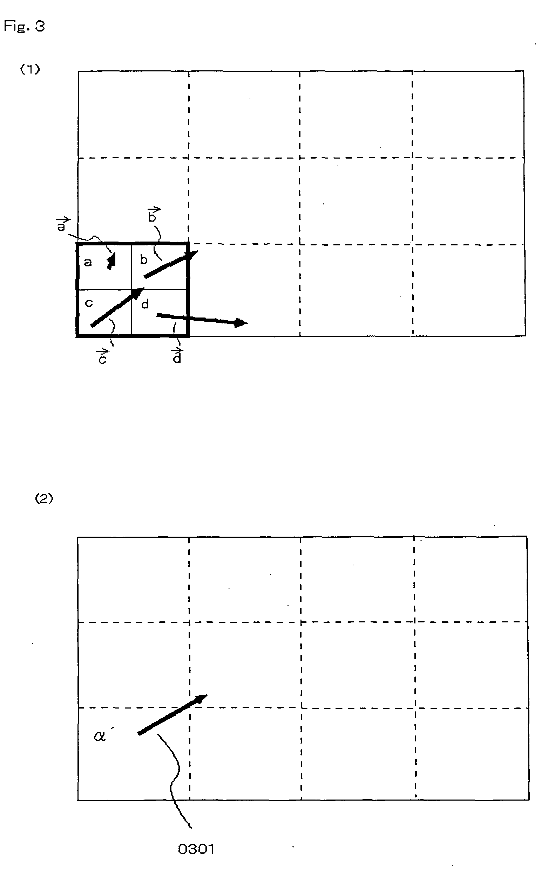

In order to solve the above deficiencies, the present invention provides a calculation apparatus for motion vector, in which global motion vector calculated based on a global macro block is utilized for determining a search range for a motion vector of a macro block, thereby calculating motion vector, has the following functions. Therefore, as indicated by Fig. 3 (1), the global macro block α' is divided, for example, into four blocks (middle blocks) a, b, c, and d, thereby detecting middle motion vectors of the respective middle blocks. Subsequently, from the detected middle motion vectors, middle motion vector having abnormal value is removed, for example, by means of 'removing vector having extreme value', 'median operation', or 'removing abnormal value by means of standard deviation'. Subsequently, as indicated by Fig. 3 (2), based on the remaining middle motion vectors, correct global motion vector 0301 is calculated. For the above purpose, the present invention comprises a division unit, which divides a global macro block into a plurality of middle blocks, a detection unit for middle motion vector, which detects a middle motion vector with respect to each divided middle block, and a calculation unit for global motion vector, which calculates a global motion vector of one global macro block based on the middle motion vector of the middle block included in the one global macro block.

According to the present invention having the above configuration, it becomes possible to remove the incorrect calculation result having the above-mentioned extreme value in many cases by means of 'removing vector having extreme value', 'median operation', or 'removing abnormal value by means of standard deviation', even if the incorrect calculation result is acquired in the calculation of middle motion vector. Accordingly, it becomes possible to calculate correct global motion vector. Therefore, it becomes possible to correctly determine a search range for calculation for motion vector based on the correct global motion vector, thereby carrying out efficient coding in Golomb coding etc., in which as the absolute value of vector becomes close to 0, high-efficient coding becomes possible, based on the correct calculation of motion vector.

### BRIEF DESCRIPTION OF THE DRAWINGS

Fig. 1 is a diagram showing another example of conventional calculation of a motion vector based on a macro block by means of global motion vector.
Fig. 2 is a diagram showing a problem in the conventional calculation of a motion vector based on a macro block by means of global motion vector.
Fig. 3 is a conceptual diagram exemplifying a calculation apparatus for motion vector of a first embodiment.
Fig. 4 is a functional block diagram of the calculation apparatus for motion vector of the first embodiment.
Fig. 5 is a diagram exemplifying division in a division unit of the calculation apparatus for motion vector of the first embodiment.
Fig. 6 is a diagram explaining calculation amount for detection process in a detection unit for middle motion vector of the calculation apparatus for motion vector of a first embodiment.
Fig. 7 is a diagram exemplifying calculation process of global motion vector in a calculation unit for global motion vector of the calculation apparatus for motion vector of a first embodiment.
Fig. 8 is a diagram exemplifying another calculation process of global motion vector in a calculation unit for global motion vector of the calculation apparatus for motion vector of a first embodiment.
Fig. 9 is a diagram exemplifying another calculation process of global motion vector in a calculation unit for global motion vector of the calculation apparatus for motion vector of a first embodiment.
Fig. 10 is a conceptual diagram exemplifying a hardware configuration of the calculation apparatus for motion vector of the first embodiment.
Fig. 11 is a flow chart showing processing in the calculation apparatus for motion vector of the first embodiment.
Fig. 12 is a conceptual diagram exemplifying a calculation apparatus for motion vector of a second embodiment.
Fig. 13 is a functional block diagram of a calculation apparatus for motion vector of the second embodiment.
Fig. 14 is a diagram exemplifying division of a frame in a division unit for frame of the calculation apparatus for motion vector of the second embodiment.
Fig. 15 is a conceptual diagram exemplifying a hardware configuration of the calculation apparatus for motion vector of the second embodiment.
Fig. 16 is a flow chart showing processing in the calculation apparatus for motion vector of the second embodiment.
Fig. 17 is a functional block diagram of a calculation apparatus for motion vector of a third embodiment.
Fig. 18 is a conceptual diagram exemplifying a predetermined rule stored in a storage unit for rule of the calculation apparatus for motion vector of the third embodiment.
Fig. 19 is a conceptual diagram exemplifying another predetermined rule stored in a storage unit for rule of the calculation apparatus for motion vector of the third embodiment.
Fig. 20 is a functional block diagram of another calculation apparatus for motion vector of the third embodiment.
Fig. 21 is a flow chart showing processing in the calculation apparatus for motion vector of the third embodiment.

### DETAILED DESCRIPTION OF THE INVENTION

Embodiments of the present invention will be described hereinbelow with reference to the drawings. The present invention is not to be limited to the above embodiments and able to be embodied in various forms without departing from the scope thereof.

### <<First embodiment>>

### <Concept of First Embodiment>

A calculation apparatus for motion vector of a first embodiment of the present invention, in which global motion vector calculated based on a global macro block is utilized for determining a search range for a motion vector of a macro block, thereby calculating motion vector, has the following functions. The calculation apparatus for motion vector having a function of dividing the global macro block into middle blocks, and a function of calculating correct global motion vector by means of the middle motion vector of the middle macro block upon calculation of the global motion vector.

Note that although the 'global macro block' is a block larger than a macro block as a unit of detection for motion vector utilized for inter-frame prediction in the coding of moving image, its size may be appropriately configured by design. Subsequently, by means of this global motion vector detected on a macro block basis, the search range for detection of the motion vector is determined. Thus, it becomes possible to narrow the search range for destination of macro block based on the global motion vector, thereby reducing processing load in the entire apparatus.

However, in cases where the global motion vector is incorrectly calculated, it is highly possible that the incorrect detection of motion vector and degradation of coding efficiency etc. are caused as described above. Therefore, in the first embodiment, global macro block is divided into middle macro blocks, thereby calculating correct global motion vector by means of the middle motion vector.

### <Configuration of First Embodiment>

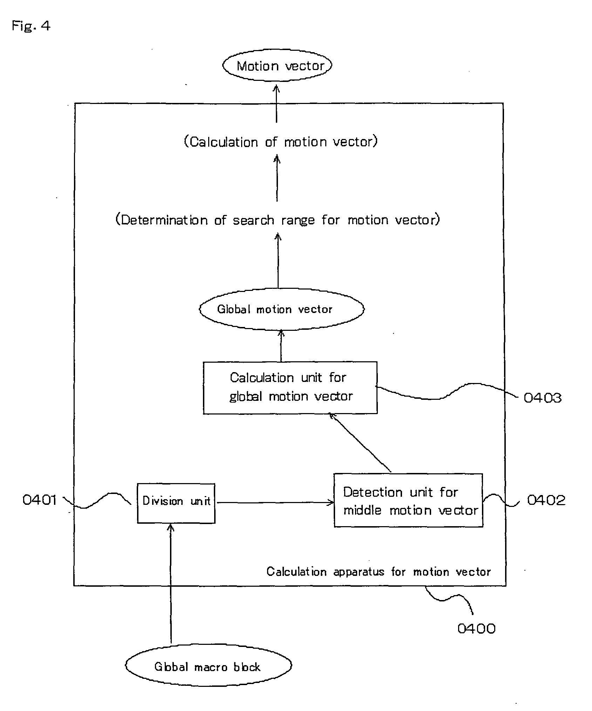

Fig. 4 is a functional block diagram of the calculation apparatus for motion vector of the first embodiment. As shown in Fig. 4, a 'calculation apparatus for motion vector' (0400) of the first embodiment comprises a 'division unit' (0401), a 'detection unit for middle motion vector' (0402), and a 'calculation unit for global motion vector' (0403). Note that, although not shown as the components in the first embodiment, in the calculation apparatus for motion vector by means of global motion vector, processes such as determination on search range based on the global motion vector, and calculation of motion vector by means of the search range are carried out.

Note that, the functional block of the apparatuses described hereinbelow can be implemented by hardware, software, or both hardware and software. Specifically, in the case of using a computer, examples of the hardware component include a CPU, a main memory, a bus, a storage device such as a hard disk or a nonvolatile memory, a storage media such as CD-ROM or DVD-ROM, a reading drive for the above media, a transmission/reception port for various communications and printing device, and other peripheral devices, and a driver program for controlling the above hardware, and other application programs, and an interface for inputting information. The above hard and software are used for sequential execution of programs operated on the memory by CPU, for processing, storing and outputting of the data inputted via the interface, or for controlling the respective hardware components. Moreover, the present invention can be implemented not only as an apparatus but also as a method thereof. Moreover, a portion of such inventions may be configured as software. Furthermore, a software product used for causing a computer to execute the software, and the recording medium, in which the software is installed, should be included in the technical scope of the present invention (the same applies through the entire specification).

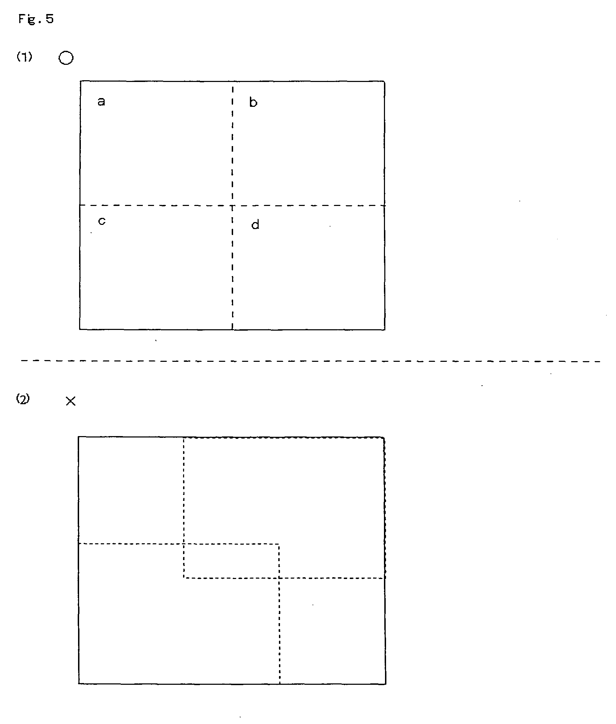

The 'division unit' (0401) has a function of dividing a global macro block into a plurality of middle blocks. Note that the number and shape of divided blocks may be arbitrarily set. In addition, the 'division' is not only a dynamic division, for example, in which the coordinate of the middle block after the division is calculated based on the coordinate information of global macro block, but also the following static division. A 'global macro block-middle block table', in which the coordinate information of the global macro block and the coordinate information of the middle block are stored, is preliminarily stored in a storage device etc. Subsequently, in the division, the table is referred to by means of the global macro block indicated by the coordinate information as a key, thereby acquiring the coordinate information of the middle block corresponding to the macro block. Note that in the both divisions, it is preferable that the middle blocks do not overlap each other as indicated by Fig. 5 (1). The reason for this is that, as shown by Fig. 5 (2), in cases where the middle blocks overlap each other, the overlapping portion is to be considered upon calculating the global motion vector by means of the middle motion vectors of the middle blocks a, b, c, and d, thereby requiring unnecessary calculation.

Therefore, a concrete example of the division of the global macro block includes a method, in which by means of the coordinate information of the global macro block, the global macro block is divided into middle blocks having a predetermined rectangular shape. Note that these global macro blocks and the plurality of middle blocks generated by division of the global macro blocks are stored by correlating their identification information.

The 'detection unit for middle motion vector' (0402) has a function of detecting a middle motion vector with respect to each divided middle block. Note that in this detection of middle motion vector, similar to the normal detection of motion vector, for example, absolute value of difference between a middle block and a block in the reference frame of the middle block is acquired with respect to each corresponding pixel, thereby calculating the summation of them as a correlation coefficient. Subsequently, search in the entire reference frame is carried out on a pixel or 1/2 pixel basis, and the respective correlation coefficients are calculated, so that the block having the smallest correlation coefficient is specified as a destination of the middle block, thereby detecting middle motion vector according to moving direction and moving distance to the destination of the middle block. Note that the above detection, in which search in the entire reference frame is carried out on 1/2 pixel basis etc., and correlation coefficient is calculated, is just an example, and so-called log search, in which correlation coefficients of any three blocks are acquired, thereby narrowing a destination block from the magnitude relation in order to reduce processing load, may be used for detecting middle motion vector.

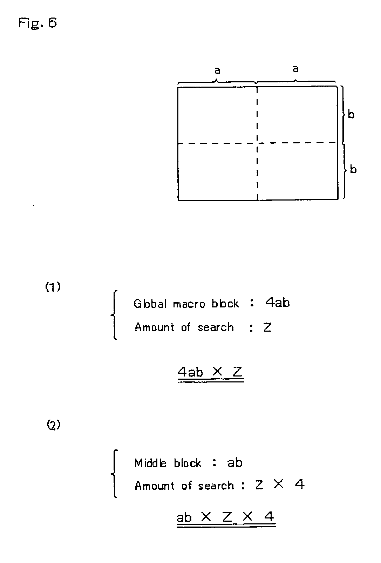

Note that, as shown in Fig. 6, letting search amount is 'Z', the calculation amount of the search for destination of global macro block, whose size is horizontal '2a' by vertical '2b', is '4ab × Z'. Meanwhile, in cases where the global macro block is divided into four middle blocks, whose size is horizontal 'a' by vertical 'b', since the amount of search for the destination is 'Z', the calculation amount is 'ab × Z × 4'. Thus, according to the method of the first embodiment for calculating global motion vector by means of middle motion vector, it becomes possible to carry out calculation with almost the same calculation amount as that of the conventional calculation of global motion vector.

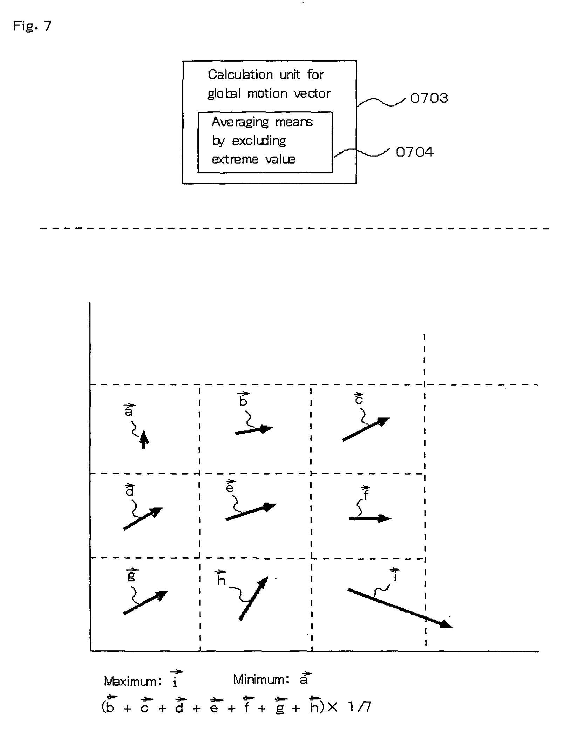

The 'calculation unit for global motion vector' (0403) has a function of calculating a global motion vector of one global macro block based on the middle motion vector of the middle block included in the one global macro block. Additionally, in the first embodiment, calculation of global motion vector in the calculation unit for global motion vector is carried out by different calculation from that of the conventional detection of motion vector. Therefore, the middle motion vector, having an abnormal value due to the extreme values caused by referring to the different block to be referred to, is removed by means of 'removing vector having extreme value', 'median operation', or 'removing abnormal value by means of standard deviation', thereby calculating global motion vector. Consequently, it becomes possible to calculate correct global motion vector. Hereinbelow, with reference to Figs. 7 to 9, calculation of global motion vector by removing the middle motion vector having extreme value in the calculation unit for global motion vector will be described.

Fig. 7 is a diagram exemplifying calculation process of global motion vector in a calculation unit for global motion vector of the calculation apparatus for motion vector of a first embodiment. As shown in Fig. 7, in the calculation apparatus for motion vector of the first embodiment, the calculation unit for global motion vector (0703) further comprises the averaging means by removing extreme value (0704). The 'averaging means by removing extreme value' (0704) has a function of averaging a summation of vector values after removing the middle motion vector having a maximum value and the middle motion vector having a minimum value from the middle motion vectors, thereby calculating the global motion vector. For example, as shown in Fig. 7, a global macro block is divided into nine middle blocks, and the respective middle motion vectors a, b, ..., and i are detected. Subsequently, the respective vector amounts are calculated and compared, so that it is determined that the vector having the maximum vector amount is 'i', and the vector having the minimum vector amount is 'a' in the nine middle motion vectors. Therefore, in the averaging means by removing extreme value, the maximum vector 'i' and the minimum vector 'a' are removed, and summation of the remaining middle motion vectors b, c, ..., and h are averaged, thereby global motion vector is acquired.

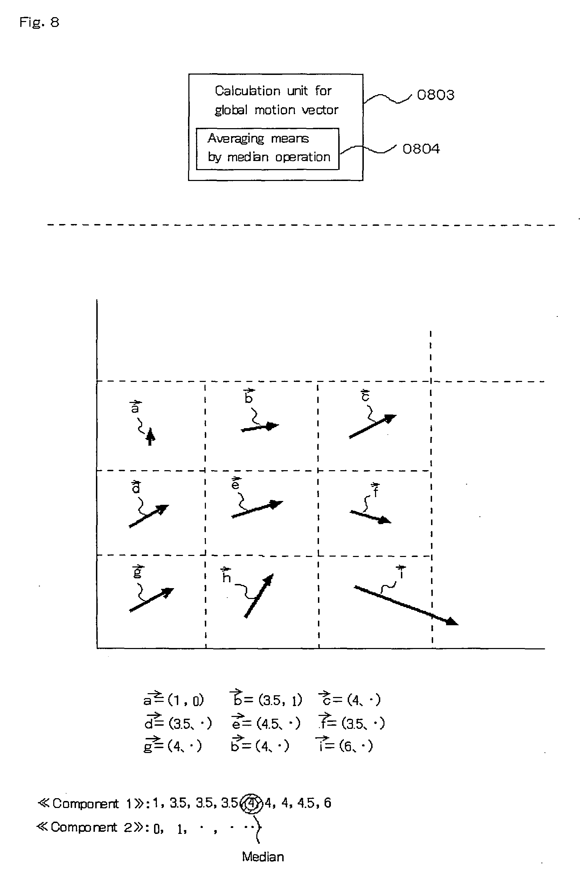

Fig. 8 is a diagram exemplifying another calculation process of global motion vector in a calculation unit for global motion vector of the calculation apparatus for motion vector of a first embodiment. As shown in Fig. 8, in the calculation apparatus for motion vector of the first embodiment, the calculation unit for global motion vector (0803) further comprises the 'averaging means by median operation' (0804). The 'averaging means by median operation' (0804) has a function of carrying out a median operation of the middle motion vector, thereby calculating the global motion vector. Note that the 'median operation' is a processing, for example, in which vector components are arranged according to magnitude, and the median value (if there are an even numbers of values, an average value of the two central values is used) is used as an average value for the calculation. For example, as shown in Fig. 8, middle motion vectors a, b, ..., and i of the nine middle blocks acquired by dividing the global macro block are detected. Subsequently, the respective vector components are arranged in ascending (or descending) order. Therefore, the median value is '4, 3', thereby acquiring the global motion vector component '4, 3'. Note that in this median operation, vectors having extreme values may be removed before acquiring the median value, thereby acquiring the median value of the remaining vectors.

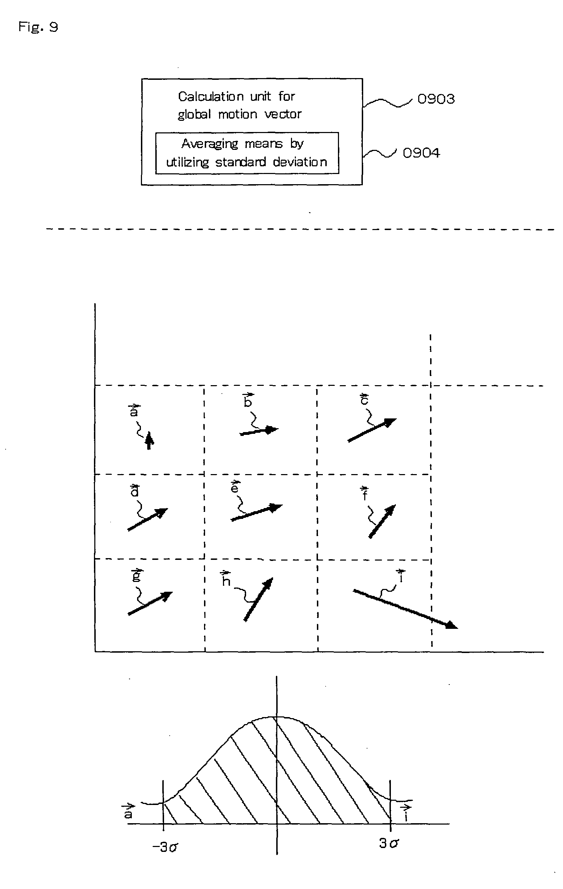

Fig. 9 is a diagram exemplifying another calculation process of global motion vector in a calculation unit for global motion vector of the calculation apparatus for motion vector of a first embodiment. As shown in Fig. 9, in the calculation apparatus for motion vector of the first embodiment, the calculation unit for global motion vector (0903) further comprises the 'averaging means utilizing standard deviation' (0904). The 'averaging means utilizing standard deviation' (0904) has a function of averaging a summation of middle motion vector values, having a value within ± 3σ, of the middle motion vectors, thereby calculating the global motion vector. Note that the 'σ' is a standard deviation, therefore, a square root of dispersion calculated by average value of 'square of (difference between each vector value and their average values)'. As shown in normal distribution in Fig. 9, 99.7 % of the vector values are included within ± 3σ. Therefore, middle motion vectors not included within ± 3σ can be regarded as the abnormal values appearing at a rate of 0.3 %. Therefore, these middle motion vectors having an abnormal value, for example, a and i are removed, and summation of the remaining middle motion vectors b, c, ..., and h is averaged, thereby acquiring global motion vector.

As described above, according to any of the above processing methods, it becomes possible to remove middle motion vector having extreme vector value, thereby calculating correct global motion vector. Consequently, based on the correct global motion vector, the search range for calculating motion vector is correctly determined, thereby calculating correct motion vector.

### <Hardware Configuration of First Embodiment>

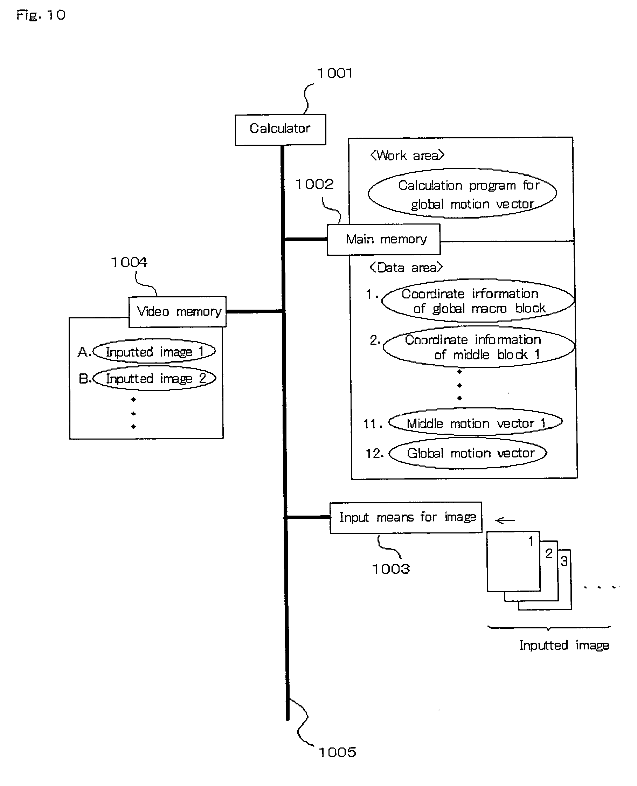

Fig. 10 is a conceptual diagram exemplifying a hardware configuration of the calculation apparatus for motion vector of the first embodiment. The respective functions of hardware components in the detection process of global motion vector will be described with reference to Fig. 10. As shown in Fig. 10, in the calculation apparatus for global motion vector of the first embodiment, the division unit, the detection unit for middle motion vector, and the calculation unit for global motion vector are implemented by a 'calculator' (1001) for calculating data, by a 'main memory' (1002) for storing data, by an 'inputting means for image' (1003) for inputting an image as an object of highly-efficient coding, for storing the inputted image, and by a 'video memory' (1004) for storing the inputted image etc. Moreover, they are mutually connected via data communication path such as a system bus (1005), and carry out transmission/reception or processing of information.

Further, the 'main memory' has a work area for operating program executed by the calculation unit, and data area for storing the data processed by the program. Further, a plurality of memory addresses are assigned to the 'main memory' and to the 'video memory', so that the program executed by the 'calculator' specifies the memory address, and accesses it, thereby mutually processing the data.

Here, the image as an object of high-efficiency coding is inputted from the 'inputting means for image'. Examples of this inputted image include moving image data, which is generated by coding without compression from analog broadcast wave received by TV tuner, or moving image data, which is recorded by a digital video camera, and is coded without compression. Alternatively, coded moving image, which is generated by decoding high-efficiency coded moving image data, may be used. Then, the inputted images configuring the moving image are stored to a predetermined memory address of video memory via system bus, for example, in the manner that the inputted image 1 (first frame of the moving image data) is stored in memory address A, and the inputted image 2 (second frame of the moving image data) is stored in memory address B.

Subsequently, the data of the inputted images are sequentially stored in the predetermined memory addresses in the 'main memory', and DCT or quantization is carried out by calculation of the 'calculator', thereby carrying out the first image transformation by means of correlation in image (spatial correlation). Subsequently, after the first image transformation, inverse-transformation (inverse-DCT, or inverse-quantization) of image is carried out, thereby generating inverse-transformed image. After the inputted image 2, in order to carry out image compression by inter-frame prediction, detection of motion is carried out by means of the inverse-transformed image and inputted image. Further, in order to reduce calculation amount and to improve detection accuracy in the detection of motion, calculation of global motion vector is further carried out. Concretely speaking, the global motion vector of the global macro block in the inputted image 2 for the inputted image 1 is calculated, so that the process is the same as that of motion prediction by means of macro block in forward prediction of the inter-frame prediction. Therefore, in order to improve the detection accuracy, in the calculation of global motion vector of the first embodiment, detection of the middle motion vector and calculation of global motion vector based on the middle motion vector are carried out as follows. Note that in the calculation of global motion vector or in the detection of middle motion vector, there are two methods such as the above-mentioned method by means of inverse-transformation and of inputted image, and a method only by means of inputted image. Hereinbelow, the method only by means of inputted image will be described.

### (Processing in Division Unit)

In order to detect middle motion vector, at the outset, the above-mentioned division of a global macro block into middle blocks is carried out in the first embodiment. Therefore, according to the instruction of calculation program for global motion vector operated on the work area of the main memory, the coordinate information of the global macro block α for calculating global motion vector in the inputted image 2 is acquired, and is stored in memory address 1 of the main memory. Subsequently, for example, in accordance with the instruction to 'acquire the coordinate information of the middle block generated by division of the global macro block according to the coordinate information as a key of the global macro block α stored in memory address 1', the above-mentioned 'global macro block-middle block table' is referred, thereby acquiring coordinate information of corresponding middle blocks 1, 2, 3, and 4. The coordinate information of the middle blocks are stored in memory addresses 2, 3, 4, and 5 of the main memory, respectively.

### (Processing in Detection Unit for Middle Motion Vector)

Subsequently, detection of middle motion vectors in the middle blocks stored into the respective memory addresses of the main memory is carried out. Note that the detection of middle motion vector is preferably carried out by a process similar to that of the conventional detection of motion vector. In order to calculate the above-mentioned correlation coefficient, pixel information of the middle block 1 is acquired based on the coordinate information. Concretely speaking, based on the coordinate information stored in memory address 2, the instruction to 'store pixel information configuring the middle block 1 of the inputted image 2 stored in the video memory into a predetermined memory address' is transmitted and is executed.

Additionally, in order to detect middle motion vector, identification information of an inputted image, which is foregoing or following reference frame of the middle block 1, for example, the inputted image 1 is specified, and is stored into the predetermined memory address of the main memory via a system bus. Subsequently, in order to calculate correlation coefficient similar to the case of middle block, based on the coordinate information of the block 1 in the inputted image 1, the pixel information of the block is acquired and is stored in the main memory. Further, the block is moved for searching on 1/2 pixel basis (or 1 pixel or 1/4 pixel basis), and similarly, the pixel information of the block is acquired and is stored in the main memory.

Subsequently, pixel information of the middle block and of the block are specified by the memory addresses, and for example, in accordance with a program instruction to 'acquire difference value of corresponding pixels between the middle block 1 and the block 1 in the inputted image 1 (to be referred), calculate summation of the absolute values, and store the calculation result (correlation coefficient) into the predetermined memory address in the main memory', the calculation in the calculator, and storage of the calculation result in memory address are carried out. Further, in accordance with similar instruction, as to the other blocks 2, 3 and so on of the inputted image 1, the correlation coefficients are calculated respectively, and are stored into the other memory addresses in the main memory. Subsequently, the respective correlation coefficients are specified by the memory addresses, and for example, in accordance with an instruction to 'carry out magnitude-comparison of calculation results (correlation coefficients) respectively stored in the main memory, thereby specifying the minimum correlation coefficient', the magnitude-comparison of the correlation coefficients is carried out by calculation of the calculator. Subsequently, the minimum correlation coefficient, so that a block correlated with the correlation coefficient is specified as the destination in the inputted image 1 of the middle block 1 in the inputted image 2. Subsequently, from the coordinate information of the middle block and of the block specified as the destination of the middle block 1, middle motion vector 1 is calculated by calculation of the calculator, and stored in memory address 11 of the main memory. Further, as to the middle blocks 2, 3, and 4, similar calculation of middle motion vector is respectively carried out. Further, as to the global macro blocks β, θ, and so on in the inputted image 2, division into middle blocks and detection of middle motion vector are similarly carried out.

### (Processing in Calculation Unit for Global Motion Vector)

Subsequently, global motion vector is calculated by means of the detected middle motion vector. For this purpose, for the detected middle motion vectors, the 'removing vector having extreme value' (averaging means by removing extreme value), 'median operation' (averaging means by median operation), or 'removing abnormal value by means of standard deviation' (averaging means by utilizing standard deviation), thereby calculating global motion vector. For example, in the case of removing a vector having an extreme value, in accordance with an instruction to 'carry out magnitude-comparison of vector quantities of the middle motion vectors, average a summation of vector values after removing the middle motion vector having a maximum value and the middle motion vector having a minimum value from the middle motion vectors, and store them in memory address 21 in the main memory', the magnitude-comparison of vector quantities of the middle motion vectors respectively stored in the memory addresses 11, 12, 13, and 14 in the main memory is carried out by calculation in the calculator. Therefore, an average value of remaining middle motion vectors after removing the middle motion vector having a maximum value and the middle motion vector having a minimum value is calculated, and is stored in memory address 21 in the main memory as a global motion vector of the global macro block α correlated in the table generated upon the division. Further, in the case of the 'median operation', an instruction to store the results of magnitude-comparison of the respective vectors in series in memory addresses, and to acquire the median component stored in the middle of the vectors (if there is an even number of vectors, the average of two central components is used) as a component of the global motion vector is sent, and calculation by the calculator is carried out. In the case of 'removing abnormal value by means of standard deviation', an instruction to calculate a standard deviation σ of vector value, and to acquire an average of middle motion vector values, having a vector value within ± 3σ, as a global motion vector is sent, and calculation by the calculator is carried out.

Therefore, by means of thus calculated global motion vector, similar to the conventional detection of motion vector by means of global motion vector, the coordinate information of search range etc. is calculated by the calculator, thereby carrying out the search based on the result and calculation of motion vector.

### <Processing Flow>

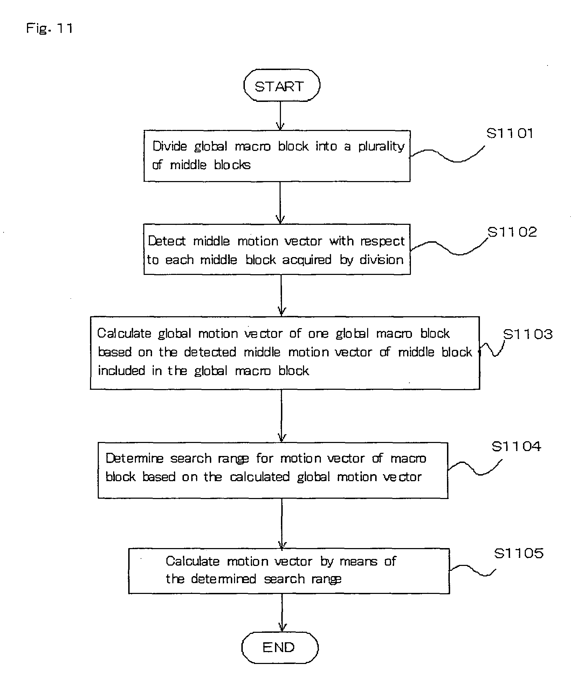

Fig. 11 is a flowchart showing processing in the calculation apparatus for motion vector of the first embodiment. Note that the following steps may be processing steps configuring a program, recorded in a medium, for controlling a computer. As shown in Fig. 11, at the outset, a global macro block is divided into a plurality of middle blocks (step S1101), and middle motion vector is detected with respect to each middle block acquired by division (step S1102). Subsequently, global motion vector of one global macro block is calculated based on the middle motion vector of middle block included in the above-mentioned detected global macro block (step S1103). Subsequently, based on the calculated global motion vector, search range for motion vector of the macro block is determined (step S1104), thereby calculating motion vector by means of the search range (step S1105).

### <Brief Description of Effects of First Embodiment>

As described above, according to the calculation apparatus for motion vector of the first embodiment, even if the incorrect calculation result is acquired in the calculation of middle motion vector, it becomes possible to remove the incorrect calculation result by means of 'removing vector having extreme value', 'median operation', or 'removing abnormal value by means of standard deviation', thereby calculating correct global motion vector. Therefore, it becomes possible to correctly determine a search range for calculation for motion vector based on the correct global motion vector, thereby carrying out efficient coding in Golomb coding etc., in which as the absolute value of vector becomes close to 0, high-efficient coding becomes possible, based on the correct calculation of motion vector.

### <<Second embodiment>>

### <Concept of Second Embodiment>

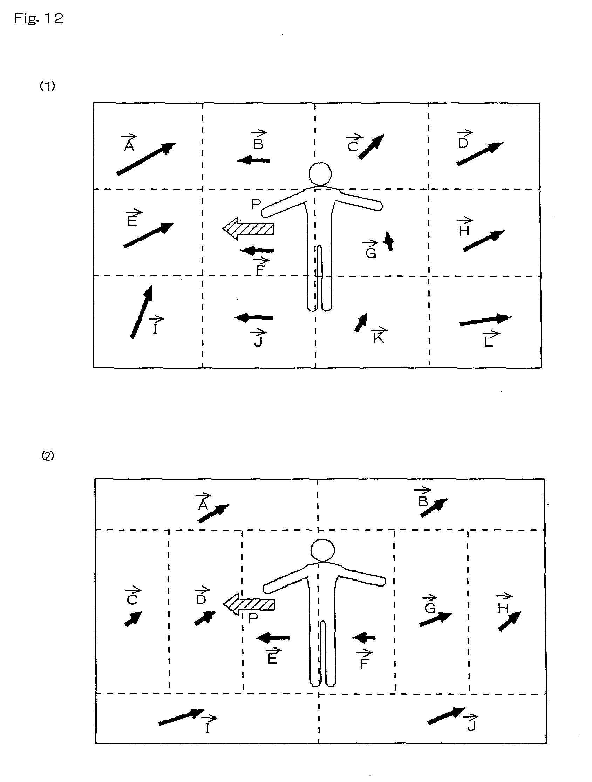

Fig. 12 is a conceptual diagram exemplifying a calculation apparatus for motion vector of a second embodiment of the present invention. As shown by Fig. 12 (1), in cases where a global macro block in a frame is uniformly divided, the global motion vector of a block including a person moving in the direction of the arrow P and nonmoving background is acquired as a vector such as the vector G, in which a vector of the person and a vector of the background are synthesized. Therefore, there is a possibility that error occurs in calculation of motion vector of the macro block including the person in the global macro block. Therefore, in the second embodiment, as shown by Fig. 12 (2), the global macro block is nonuniformly divided to a block (possibly) including many moving objects, and to a block including not so many moving objects. This makes it possible to reduce effect of motion vector of the nonmoving background, thereby appropriately calculating a motion vector of a block including moving object such as the vector F. Meanwhile, it is possible to reduce effect of motion vector of the moving object, thereby appropriately calculating a motion vector of a block including nonmoving background such as the vector D.

### <Configuration of Second Embodiment>

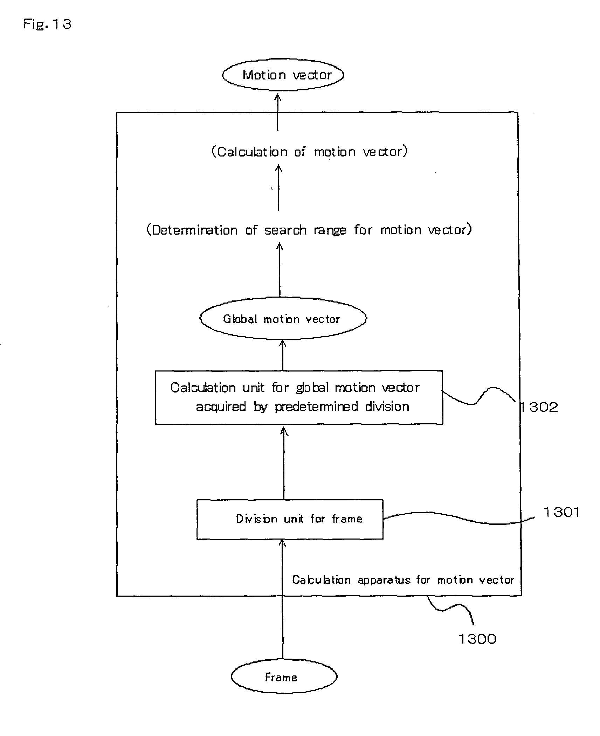

Fig. 13 is a functional block diagram of a calculation apparatus for motion vector of the second embodiment. As shown in Fig. 13, a 'calculation apparatus for motion vector' (1300) of the second embodiment, in which global motion vector calculated based on a global macro block is utilized for determining a search range for a motion vector of a macro block, thereby calculating motion vector, further comprises a 'division unit for frame' (1301), and a 'calculation unit for global motion vector acquired by predetermined division' (1302)

The 'division unit for frame' (1301) has a function of dividing a frame area into a plurality of nonuniform global macro blocks in accordance with a predetermined rule. An example of the division includes a division in accordance with a preliminarily set mode. For example, assuming that an important object is normally located in the central portion in a moving image, a configuration, in which global macro blocks in the central portion are small, and global macro blocks in the peripheral portion are large, may be used. Further, an example of the division in the division unit for frame includes a method, in which a table indicating coordinate information of the respective global macro blocks etc. is provided, and is used for the division by the division unit for frame. Therefore, an example of the 'predetermined rule' includes a coordinate table storing the coordinate information indicating the division pattern.

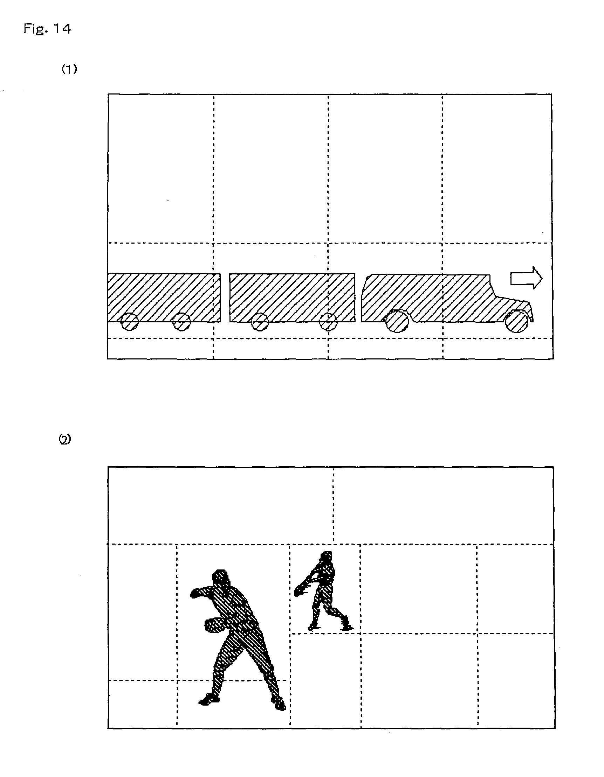

Additionally, as shown by Fig. 14 (1), for example, in the case of a moving image, including a car moving at high-speed, in the horizontal direction in a frame, division to generate a global macro block having wide area in the horizontal direction may be carried out. Alternatively, as shown by Fig. 14 (2), in the case of a moving image of a baseball game, according to configuration of typical scene, division to generate a global macro block, in which a catcher, a hitter, or a pitcher is mainly included, may be carried out. Therefore, the division is carried out, so that moving object and nonmoving object are separately included in nonuniform global macro blocks, thereby enabling calculation of global motion vector in order to calculate correct motion vector. Note that in high-efficiency coding, a configuration, in which information specifying a type of moving image to be coded is acquired according to mode selection by a user, thereby selecting the above-mentioned division pattern, may be used. Alternatively, a rule, in which history of motion vector with respect to each block in a predetermined frame (e.g., the latest 10 frames) is stored, and based on the history, an area including large amount of movement is divided into small portions, or an area including small amount of movement is divided into large portions, may be selected. Similarly, by means of the history, a rule, in which a new global motion vector is generated from similar motion vectors, may be selected.

The 'calculation unit for global motion vector acquired by predetermined division' (1302) has a function of calculating a global motion vector of the global macro block acquired by the division. Note that this calculation of the global motion vector is possible by the same calculation as the conventional calculation of global motion vector by means of the correlation coefficient excluding the nonuniformity in the shape, so that description is omitted.

### <Hardware Configuration of Second Embodiment>

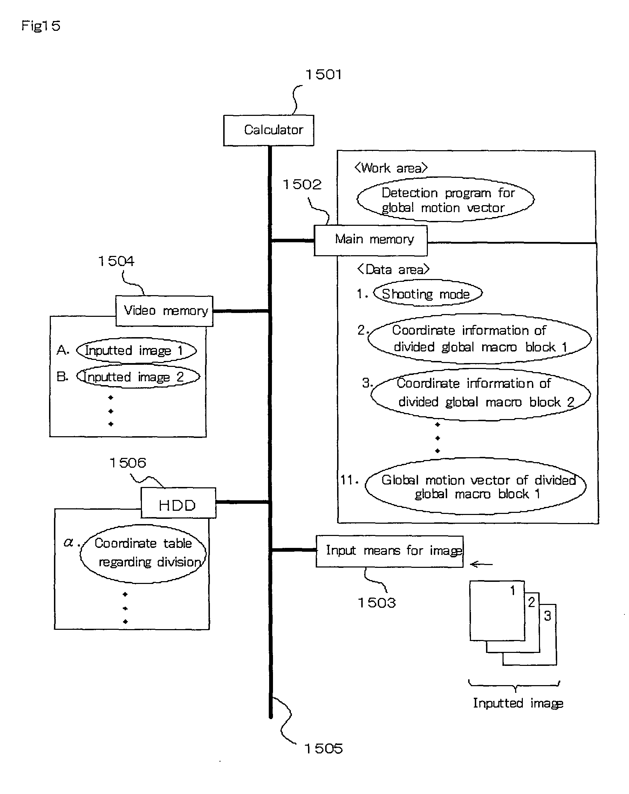

Fig. 15 is a conceptual diagram exemplifying a hardware configuration of the calculation apparatus for motion vector of the second embodiment. The respective functions of hardware components in the detection process of global motion vector will be described with reference to Fig. 15. As shown in Fig. 15, in the calculation apparatus for global motion vector of the second embodiment, the division unit for frame, and the detection unit for global motion vector acquired by predetermined division are implemented by a 'calculator' (1501) for calculating data, by a 'main memory' (1502) for storing data, by an 'inputting means for image' (1503) for inputting an image as an object of highly-efficient coding, for storing the inputted image, by a 'video memory' (1504) for storing the inputted image etc., and by a storage (1506) for storing a coordinate table etc. indicating the above nonuniform division pattern of the macro block. Moreover, they are mutually connected via data communication path such as a system bus (1505), and carry out transmission/reception or processing of information.

Note that, a plurality of memory addresses are assigned to the 'main memory', so that the program executed by the 'calculator' specifies the memory address, and accesses it, thereby mutually processing the data.

Here, the image as an object of high-efficiency coding is inputted from the 'inputting means for image. This inputted image may be various data such as coded moving image data of analog data similar to the first embodiment. Then, the inputted images configuring the moving image are stored to predetermined memory addresses of video memory via system bus, for example, in the manner that the inputted image 1 (first frame of the moving image data) is stored in memory address A, and the inputted image 2 (second frame of the moving image data) is stored in memory address B.

Subsequently, the data of the inputted images are sequentially stored into the predetermined memory addresses in the 'main memory', and DCT or quantization is carried out by calculation of the 'calculator', thereby carrying out the first image transformation by means of correlation in image (spatial correlation). Subsequently, after the first image transformation, inverse-transformation (inverse-DCT or inverse-quantization) of image is carried out, thereby generating inverse-transformed image. Subsequently, by means of inversely transformed image and inputted image, or of a plurality of inputted images, calculation of global motion vector is carried out.

### (Processing in Division Unit for Frame)

For the above purpose, in the second embodiment, as described above, at the outset, the frame area of the inputted image is divided into nonuniform global macro blocks. Subsequently, according to an instruction of the calculation program for global motion vector operated on the work area of the main memory, a coordinate table indicating the coordinate information of the nonuniform global macro blocks stored in the 'storage' is stored in the memory address 1 in the main memory. Subsequently, according to an instruction to 'acquire the coordinate information of the respective global macro blocks with reference to the coordinate table, and store them into predetermined memory addresses, respectively', the respective coordinate information of the nonuniform global macro blocks acquired by the division of the frame are acquired, and are stored in memory addresses 2, 3, and so on in the main memory.

### (Processing in Calculation Unit for Global Motion Vector Acquired by Predetermined Division)

Subsequently, based on the coordinate information of the global macro block 1 (acquired by predetermined division), stored in memory address in the main memory, calculation of global motion vector is carried out. Note that similar to the conventional calculation of global motion vector, the calculation may be carried out by means of correlation coefficient, which is a summation of absolute value of difference between corresponding pixels. Subsequently, the calculated global motion vector is stored in memory address 11 in the main memory. Moreover, as to the other global macro blocks 2, 3, and so on, similarly, the global motion vectors are calculated, and are stored in predetermined memory addresses.

As described above, for example, calculation of global motion vectors of nonuniform global macro blocks, divided in a manner that moving object and nonmoving object are separately included, is carried out, thereby enabling determination of search range accurately corresponding to the movement of the respective macro blocks included in the respective global macro blocks. Note that, the determination of search range and the calculation of motion vector based on the determination may be carried out similar to the conventional calculation.

### <Processing Flow>

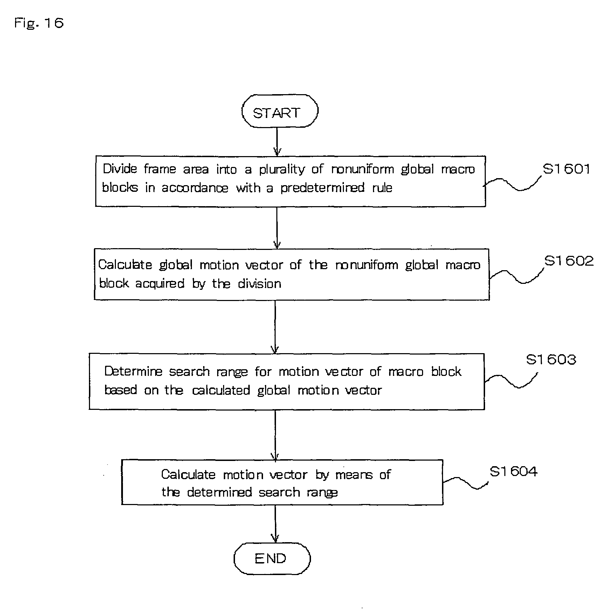

Fig. 16 is a flowchart showing processing in the calculation apparatus for motion vector of the second embodiment. Note that the following steps may be processing steps configuring a program, recorded in a medium, for controlling a computer. As shown in Fig. 16, at the outset, a frame area is divided into a plurality of nonuniform global macro blocks in accordance with a predetermined rule (step S1601), and global motion vector of global macro block acquired by division is calculated (step S1602). Subsequently, based on the calculated global motion vector, search range for motion vector of the macro block is determined (step S1603), thereby calculating motion vector by means of the search range (step S1604).

### <Brief Description of Effects of Second Embodiment>

As described above, according to the calculation apparatus of the second embodiment, it becomes possible to calculate global motion vectors of global macro blocks divided in a manner that moving object and nonmoving object are separately included. Therefore, it becomes possible to determine search range accurately corresponding to the movement of the respective macro blocks included in the respective global macro blocks, thereby calculating the motion vector.

### <<Third embodiment>>

### <Concept of Third Embodiment>

In the calculation apparatus for motion vector according to the second embodiment, a plurality of the predetermined rules are stored, and by selectively utilizing the rule, a frame is divided into nonuniform global macro blocks.

### <Configuration of Third Embodiment>

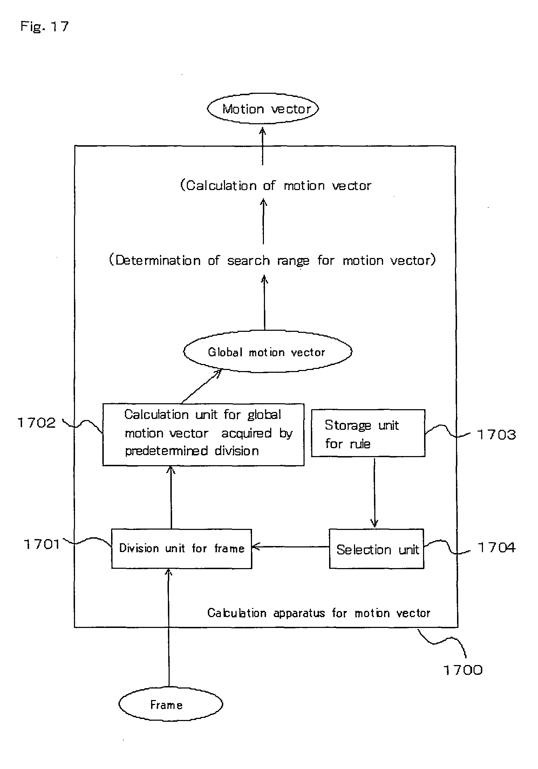

Fig. 17 is a functional block diagram of a calculation apparatus for motion vector of the third embodiment. As shown in Fig. 17, a 'calculation apparatus for motion vector' (1700) of the third embodiment according to the second embodiment, in which global motion vector calculated based on a global macro block is utilized for determining a search range for a motion vector of a macro block, thereby calculating motion vector, further comprises a 'division unit for frame' (1701), and a 'calculation unit for global motion vector acquired by predetermined division' (1702). Note that the 'division unit for frame', and the 'calculation unit for global motion vector acquired by predetermined division' are described in the second embodiment, so that descriptions are omitted. The calculation apparatus for motion vector of the third embodiment, further comprises a 'storage unit for rule' (1703), and a 'selection unit' (1704).

The 'storage unit for rule' (1703) has a function of storing a plurality of the predetermined rules. The storage unit for rule can be implemented by magnetic recording device such as a hard disk drive, by nonvolatile memory, or by optical media such as DVD disk, and by a reading drive thereof.

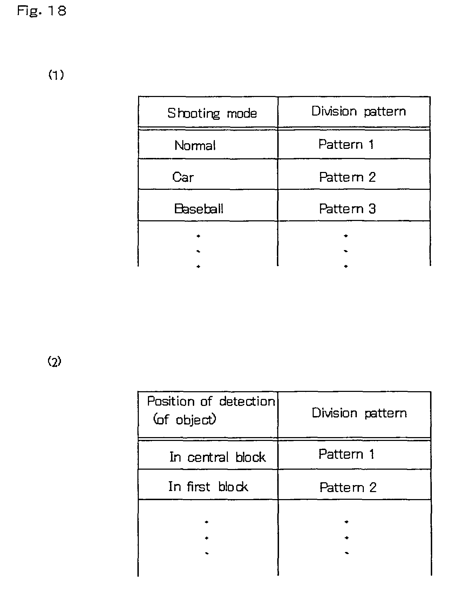

Fig. 18 is a conceptual diagram exemplifying a predetermined rule. As shown in Fig. 18, an example of the predetermined rule includes a rule for specifying a division pattern of global macro block. For example, as shown in Fig. 18 (1), the division pattern correlated with a mode specified by a user is set, and based on the information indicating the mode inputted though a interface, for example in the case of normally shot moving image, a frame is divided based on the coordinate information etc. indicated by the pattern 1. Alternatively, by pattern matching of the inputted image of Fig. 18, for example, a position of important object is detected, and the frame is divided based on the coordinate information etc. indicated by the division pattern set according to the detection result.

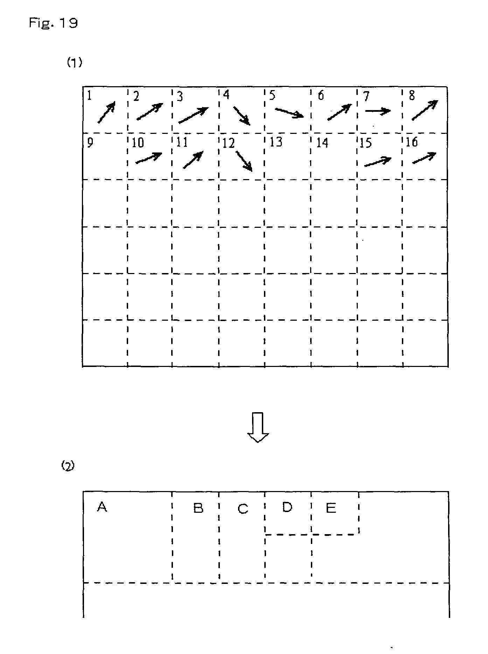

Fig. 19 is a conceptual diagram exemplifying another predetermined rule. In this predetermined rule, the middle motion vector of the middle block described in the first embodiment is utilized. Therefore, as shown by Fig. 19(1), the respective middle motion vectors of the respective middle blocks are calculated. Subsequently, the comparison of vector values between adjacent or non-adjacent blocks is carried out, and middle blocks having approximate vector within a predetermined range, for example, the blocks 1, 2, 9, and 10 are synthesized to make the global macro block A. Therefore, in this predetermined rule, it is preferable that a range for judgment on approximation of the vectors is determined. Therefore, the above predetermined rule is selected in the selection unit, and is used for a rule for division of frame.

The 'selection unit' (1704) has a function of selecting a rule utilized by the division unit for frame from the plurality of stored rules. As a standard for this selection, as described above, the mode information inputted though an interface by a user, or the position information of an important object in a frame detected by pattern matching may be utilized. Moreover, in the selection by the selection unit, a division method may be selected other than the division pattern. For example, it may be selected whether division of a global macro block by means of middle block is used or not.

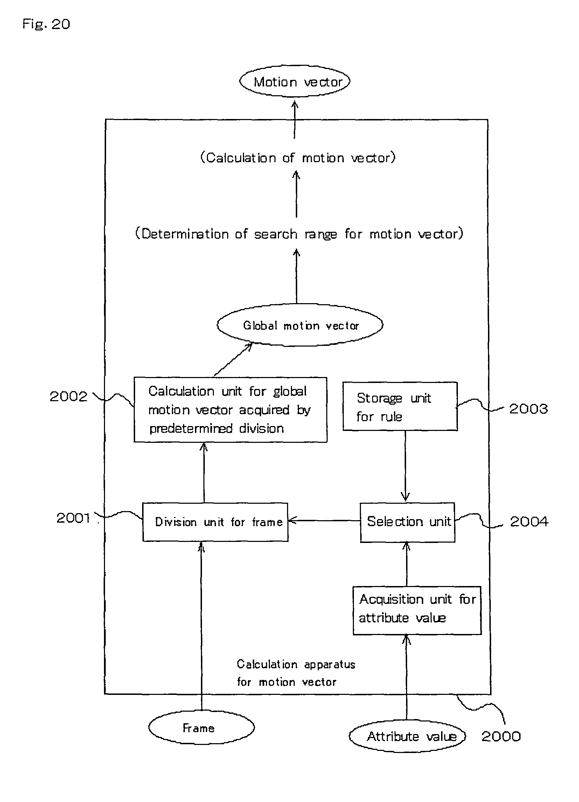

Additionally, upon this selection, the above information as the selection standard is acquired as 'attribute value' by the calculation apparatus for motion vector of the third embodiment, and the above selection may be carried out based on the attribute value. Fig. 20 is a functional block diagram of the calculation apparatus for motion vector comprising the 'acquisition unit for attribute value' for acquiring the attribute value. As shown in Fig. 20, a 'calculation apparatus for motion vector' (2000) comprises a 'division unit for frame' (2001), a 'calculation unit for global motion vector acquired by predetermined division' (2002), a 'storage unit for rule' (2003), and a 'selection unit' (2004). Moreover, the apparatus further comprises an 'acquisition unit for attribute value' (2005).

The 'acquisition unit for attribute value' (2005) has a function of acquiring an attribute value of a moving image, of which global motion vector is to be calculated. As described above, examples of the 'attribute value' include a value indicating the mode information selected and inputted through an interface by a user, a value indicating a position of an important object in a frame detected by pattern matching, or a value indicating whether division of a global macro block by means of middle block is used or not. Therefore, by selecting a rule according to the attribute value thus acquired, it becomes possible to divide a global macro block according to inputted image.

### <Processing Flow>

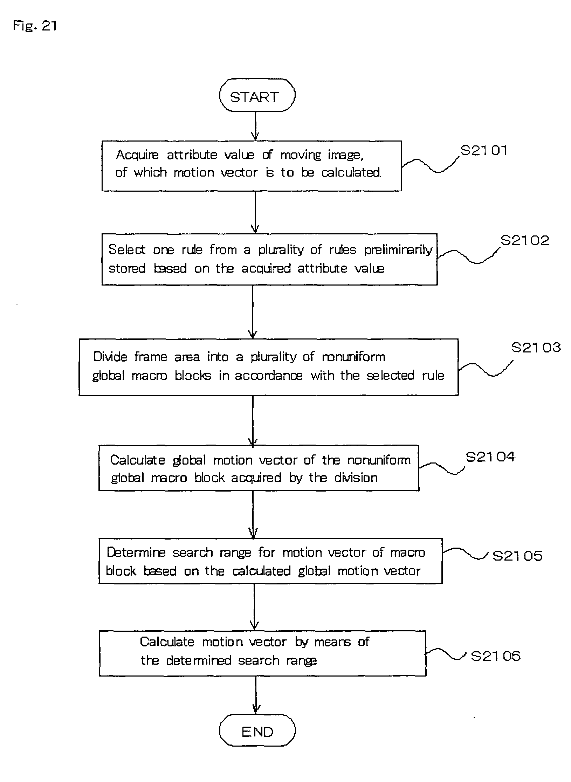

Fig. 21 is a flow chart showing processing in the calculation apparatus for motion vector of the third embodiment. Note that the following steps may be processing steps configuring a program, recorded in a medium, for controlling a computer. As shown in Fig. 21, at the outset, attribute value of moving image, of which motion vector is to be calculated, is acquired (step S2101). Based on the attribute value, one rule is selected from a plurality of rules preliminarily stored (step S2102). Subsequently, a frame area is divided into a plurality of nonuniform global macro blocks in accordance with the selected rule (step S2103), and global motion vector of global macro block acquired by division is calculated (step S2104). Subsequently, based on the calculated global motion vector, search range for motion vector of the macro block is determined (step S2105), thereby calculating motion vector by means of the search range (step S2106).

### <Brief Description of Effects of Third Embodiment>

As described above, in the calculation apparatus for motion vector of the third embodiment, it becomes possible to select a rule used for division of a frame area according to an attribute value of image etc. Therefore, nonuniform division of a global macro block suitable for inputted image can be carried out. Moreover, it becomes possible to determine search range accurately corresponding to the movement of the respective macro blocks included in the respective global macro blocks, thereby calculating the motion vector.

## Claims

1. A calculation apparatus for motion vector, in which global motion vector calculated based on a global macro block is utilized for determining a search range for a motion vector of a macro block, thereby calculating motion vector, comprising:
a division unit, which divides a global macro block into a plurality of middle blocks;
a detection unit for middle motion vector, which detects a middle motion vector with respect to each divided middle block; and
a calculation unit for global motion vector, which calculates a global motion vector of one global macro block based on the middle motion vector of the middle block included in the one global macro block.

2. The calculation apparatus for motion vector according to Claim 1, wherein
said calculation unit for global motion vector comprises
averaging means by removing extreme value, which averages a summation of vector values after removing the middle motion vector having a maximum value and the middle motion vector having a minimum value from said middle motion vectors, thereby calculating the global motion vector.

3. The calculation apparatus for motion vector according to Claim 1, wherein
said calculation unit for global motion vector comprises
averaging means by median operation, which carries out a median operation of said middle motion vector, thereby calculating the global motion vector.

4. The calculation apparatus for motion vector according to Claim 1, wherein
said calculation unit for global motion vector comprises
averaging means by utilizing standard deviation, which averages a summation of middle motion vector values, having a value within ± 3σ, of said middle motion vectors, thereby calculating the global motion vector.

5. A calculation apparatus for motion vector, in which global motion vector calculated based on a global macro block is utilized for determining a search range for a motion vector of a macro block, thereby calculating motion vector, comprising:
a division unit for frame, which divides a frame area into a plurality of nonuniform global macro blocks in accordance with a predetermined rule; and
a calculation unit for global motion vector acquired by predetermined division, which calculates a global motion vector of the global macro block acquired by the division.

6. The calculation apparatus for motion vector according to Claim 5, further comprising:
a storage unit for rule, which stores a plurality of said predetermined rules; and
a selection unit, which selects a rule utilized by the division unit for frame from the plurality of stored rules.

7. The calculation apparatus for motion vector according to Claim 6, further comprising:
an acquisition unit for attribute value, which acquires an attribute value of a moving image, of which global motion vector is to be calculated, wherein
said selection unit carries out said selection based on the acquired attribute value.

8. A calculation method for motion vector, in which global motion vector calculated based on a global macro block is utilized for determining a search range for a motion vector of a macro block, thereby calculating motion vector, causing a computer to execute the following steps:
a division step, which divides a global macro block into a plurality of middle blocks;
a detection step for middle motion vector, which detects a middle motion vector with respect to each divided middle block; and
a calculation step for global motion vector, which calculates a global motion vector of one global macro block based on the middle motion vector of the middle block included in the one global macro block.

9. The calculation method for motion vector according to Claim 8, wherein
said calculation step for global motion vector is an averaging step by removing extreme value, which averages a summation of vector values removing the middle motion vector having a maximum value and the middle motion vector having a minimum value from said middle vectors, thereby calculating the global motion vector.

10. The calculation method for motion vector according to Claim 8, wherein
said calculation unit for global motion vector is an averaging step by median operation, which carries out a median operation of said middle motion vector, thereby calculating the global motion vector.

11. The calculation method for motion vector according to Claim 8, wherein
said calculation unit for global motion vector is an averaging means by median operation, which carries out a median operation of said middle motion vector, thereby calculating the global motion vector.

12. A calculation method for motion vector, in which global motion vector calculated based on a global macro block is utilized for determining a search range for a motion vector of a macro block, thereby calculating motion vector, causing a computer to execute the following steps:
a division step for frame, which divides a frame area into a plurality of nonuniform global macro blocks in accordance with a predetermined rule; and
a calculation step for global motion vector acquired by predetermined division, which calculates a global motion vector of the global macro block acquired by the division.

13. The calculation method for motion vector according to Claim 12, further comprising:
a recording step for rule, which carries out recording a plurality of said predetermined rules in a recording medium in order to store them; and
a selection step, which selects a rule utilized by the division unit for frame from the plurality of stored rules.

14. The calculation method for motion vector according to Claim 13, further comprising:
an acquisition step for attribute value, which acquires an attribute value of a moving image, of which global motion vector is to be calculated, wherein
said selection step carries out said selection based on the acquired attribute value.
